# EUROPÄISCHE PATENTSCHRIFT

(11) **EP 3 356 107 B1**
(45) Veröffentlichungstag und Bekanntmachung des Hinweises auf die Patenterteilung: **22.09.2021**
(21) Anmeldenummer: 16778721.7
(22) Anmeldetag: 26.09.2016
(51) Int. Cl.: B29C 39/02, B29C 39/10, B29C 45/00, B29L 11/00

(54) **OPTISCHES BAUTEIL UND VERFAHREN ZU SEINER HERSTELLUNG**
OPTICAL ELEMENT AND PROCESS FOR ITS MANUFACTURING
ÉLÉMENT OPTIQUE ET PROCÉDÉ POUR LA FABRICATION LE MÊME

(30) Priorität: 28.09.2015 DE 102015116402
(43) Veröffentlichungstag der Anmeldung: 08.08.2018
(73) Patentinhaber: tooz technologies GmbH, 73430 Aalen (DE)
(72) Erfinder: PROCHNAU, Jens, 73447 Oberkochen (DE); PÜTZ, Jörg, 73431 Aalen (DE)
(74) Vertreter: PATERIS Patentanwälte PartmbB
(86) Internationale Anmeldenummer: PCT/EP2016/072857
(87) Internationale Veröffentlichungsnummer: WO 2017/055217

(56) Entgegenhaltungen:
- WO-A1-03/032066
- WO-A1-2015/044305
- DE-A1-102013 219 622
- US-A1- 2006 192 306
- US-A1- 2010 027 121
- US-A1- 2013 120 707
- US-A1- 2013 148 363
- US-A1- 2015 192 711

## Beschreibung

Die vorliegende Erfindung betrifft ein optisches Bauteil mit einem lichtführenden Bereich, welches insbesondere ein optisches Bauteil für eine Datenbrille sein kann. Daneben betrifft die Erfindung ein Verfahren zum Herstellen eines derartigen optischen Bauteils.

Optische Bauteile, wie sie beispielsweise für die Herstellung von Datenbrillen Verwendung finden, weisen häufig Abschnitte mit stark unterschiedlichen Volumina und unterschiedlichen Geometrien auf. Es wird angestrebt, derartige optische Bauteile serienmäßig im Spritzguss herzustellen. Hierbei treten jedoch Schwierigkeiten auf, da der Spritzguss große Volumenunterschiede und starke unterschiedliche Geometrien, wie sie für die optischen Flächen und lichtführenden Bereich derartiger optischer Bauteile benötigt werden, nicht oder nur mit sehr hohem Aufwand unterstützt.

In US 2013/0148363 A1 ist eine dicke Linse mit starker Durchbiegung beschrieben. Die Herstellung der Linse erfolgt, indem zuerst ein erster Linsenteil 14 spritzgegossen wird und anschließend ein zweiter Linsenteil 17 an den ersten Linsenteil angeschmolzen wird.

Die Druckschriften US 2013/0120707 A1, US 2015/0192711 A1 und US 2010/0027121 A1 beschreiben Überzüge bzw. Beschichtungen, die über eine Oberfläche eines vorläufigen Bauteils aufgebracht werden.

Die Druckschrift WO 03/032066 A1 beschreibt eine elektroaktive Linse. Dabei kann die Linse eine vordere Substratkomponente und eine hintere Substratkomponente umfassen, die einander zugewandte Aussparungen aufweisen, in die ein elektroaktives Element eingesetzt wird. Das elektroaktive Element bewirkt Veränderungen der Eigenschaften der Linse, die den Strahlengang des Lichts beeinflussen.

Die Druckschriften WO 2015/044305 A1, DE 10 2013 219622 A1 und US 2006/192306 A1 beschreiben optische Bauteile, in denen beim Anfertigen Bereiche weggelassen werden, in die den Strahlengang des Lichts beeinflussende Elemente eingesetzt werden.

Es ist daher eine Aufgabe der vorliegenden Erfindung, ein Verfahren zum Herstellen eines optischen Bauteils zur Verfügung zu stellen, welches die Anwendung von Spritzguss beim Herstellen des optischen Bauteils vereinfacht bzw. erst ermöglicht. Daneben ist es eine weitere Aufgabe der vorliegenden Erfindung, ein optisches Bauteil zur Verfügung zu stellen, welches unter Verwendung von Spritzguss serienmäßig hergestellt werden kann.

Die erste Aufgabe wird durch ein Verfahren zum Herstellen eines optischen Bauteils nach Anspruch 1 gelöst, die zweite Aufgabe durch ein optisches Bauteil nach Anspruch 8.

Die abhängigen Ansprüche enthalten vorteilhafte Ausgestaltungen der Erfindung.

Das Verfahren zum Herstellen eines optischen Bauteils, welches einen kleinvolumigen Abschnitt und einen großvolumigen Abschnitt umfasst, umfasst die Schritte:
a) Herstellen eines vorläufigen Bauteils mittels Spritzgießens, wobei im vorläufigen Bauteil gegenüber dem optischen Bauteil ein Bereich weggelassen ist, der sich in demjenigen Abschnitt des vorläufigen Bauteils befindet, der dem großvolumigen Abschnitt im optischen Bauteil entspricht;
b) Fertigstellen des optischen Bauteils durch Ergänzen des vorläufigen Bauteils um den beim Spritzgießen weggelassenen Bereich, nachdem das spritzgegossene vorläufige Bauteil erstarrt ist.

Der beim Spritzgießen weggelassene Bereich im vorläufigen Bauteil ist eine Aussparung in demjenigen Abschnitt des vorläufigen Bauteils, der im optischen Bauteil dem großvolumigen Abschnitt entspricht. Zum Ergänzen des vorläufigen Bauteils findet eine Füllung in Form einer erstarrenden oder aushärtenden viskosen Füllmasse Verwendung. Die Füllmasse kann dabei im nicht erstarrten bzw. nicht ausgehärteten Zustand in die Aussparung eingefüllt werden und anschließend erstarren bzw. aushärten. Als eine Alternative zur erstarrenden oder aushärtenden viskosen Füllmasse kann zum Ergänzen des vorläufigen Bauteils eine formstabiles Füllstückes in die Aussparung eingefügt werden. Das Füllstück kann wie das vorläufige Bauteil mittels eines Spritzgussprozesses hergestellt werden. Das Fügen kann durch Kleben erfolgen

Bei Geometrien der Aussparung, die eine oder mehrere offene Seiten aufweist, können die offenen Seiten der Aussparung mittels einer Form geschlossen werden, die dazu dient, die mit der Füllmasse zu füllende Aussparung zu begrenzen.

Die Begriffe großvolumig und kleinvolumig sollen im Rahmen der Erfindung nicht das absolute Volumen der Abschnitte wiederspiegeln. Stattdessen soll im kleinvolumigen Abschnitt der Abstand des am weitesten von einer Oberfläche des entsprechenden Abschnittes entfernten Volumenelements von der nächstgelegenen Oberfläche höchstens der Hälfte desjenigen Abstandes betragen, den im großvolumigen Abschnitt das am weitesten von einer Oberfläche dieses Abschnitts entfernte Volumenelement zur nächstgelegenen Oberfläche besitzt. In diesem Sinne kann ein kleinvolumiger Abschnitt sogar ein größeres absolutes Volumen aufweisen als ein großvolumiger Abschnitt, wenn der kleinvolumige Abschnitt im Vergleich zum großvolumigen Abschnitt eine deutlich flachere Geometrie besitzt.

Das fertige optische Bauteil weist im großvolumigen Abschnitt einen ausschließlich Licht führenden Bereich auf, wobei sich der beim Spritzgießen des vorläufigen Bauteils weggelassene Bereich dort befindet, wo im fertigen optischen Bauteil der ausschließlich Licht führende Bereich vorhanden ist. Als ausschließlich Licht führender Bereich soll hierbei ein Bereich angesehen werden, der von einem Strahlengang passiert wird ohne dass eine reflektive, refraktive oder diffraktive Beeinflussung des Strahlengangs im Volumen des Bereiches erfolgt. Eine reflektive, refraktive oder diffraktive Beeinflussung des Strahlengangs an einer Grenzfläche zwischen dem Spritzgussmaterial und dem Ergänzungsmaterial kann allerdings möglich sein.

Dadurch, dass im vorläufigen Bauteil beim Spritzgießen im Vergleich zu dem optischen Bauteil ein Bereich weggelassen wird, können auch optische Bauteile, die Bereiche mit stark unterschiedlichen Volumina oder stark unterschiedlichen Bauteilgeometrien - und dadurch einen großvolumigen Bereich und einen kleinvolumigen Bereich - aufweisen, unter Verwendung eines Spritzgussprozess hergestellt werden. Die Unterschiede in den Volumina bzw. Bauteilgeometrien werden dabei durch Weglassen des Bereiches in dem mit dem Spritzgussprozess herzustellenden vorläufigen Bauteil verringert, wodurch die beim Spritzgießen aufgrund großer Volumenunterschiede oder stark unterschiedlicher Geometrien auftretenden Schwierigkeiten verringert werden. Insbesondere können durch die Aussparung die Volumina der einzelnen Bereiche des vorläufigen Bauteils derart aneinander angeglichen werden, dass die Wärme des Spritzgussmaterials beim Abkühlen und Erstarren weitgehend gleich schnell aus den einzelnen Bereichen abgeführt werden kann, so dass die Ausbildung von heißen Zonen innerhalb des Spritzgussmaterials zuverlässig vermieden werden kann. Dadurch wird es möglich, dass das Spritzgussmaterial im vorläufigen Bauteil gleichmäßiger erstarrt, wodurch sich Spannungen im erkalteten Material, welche die optischen Eigenschaften beinträchtigen können, weitgehend vermeiden lassen, und der Volumenschrumpf gleichmäßiger wird. Durch die Vergleichmäßigung des Volumenschrumpfes lässt sich die Entstehung von Spannungen, welche die optischen Eigenschaften beinträchtigen können, ebenfalls reduzieren. Insgesamt kann so die Ausbildung von zu Doppelbrechung führenden mechanischen Spannungen im spritzgegossenen optischen Bauteil weitgehend vermieden werden.

Im Rahmen des erfindungsgemäßen Verfahrens kann es vorteilhaft sein, wenn das Material zum Ergänzen des vorläufigen Bauteils um den beim Spritzgießen weggelassenen Bereich optische Eigenschaften aufweist, die denen des Spritzgussmaterials entsprechen. Beispielsweise kann der Brechungsindex des Materials der Ergänzung dem Brechungsindex des Spritzgussmaterials wenigstens auf die dritte Nachkommastelle, vorzugsweise wenigstens auf die vierte Nachkommastelle bei einer Wellenlänge, gleichen. Zusätzlich oder alternativ können die beiden Materialien so gewählt sein, dass die Abbe-Zahl der Ergänzung der Abbe-Zahl des Spritzgussmaterials wenigstens auf die Einerstelle, vorzugsweise auf die erste Nachkommastelle, gleicht. Auf diese Weise kann erreicht werden, dass die Übergänge zwischen dem Spritzgussmaterial und dem Material der Ergänzung die optischen Eigenschaften des optischen Bauteils nur geringfügig beeinflussen und insbesondere die Beeinflussung soweit reduziert, dass das fertige optische Bauteil als ein aus einem optisch homogenen Material bestehendes Bauteil wahrgenommen wird.

Andererseits besteht auch die Möglichkeit, die optischen Eigenschaften des Materials der Ergänzung im Hinblick auf die optischen Eigenschaften des vorläufigen Bauteils so zu wählen, dass sie optische Fehler des vorläufigen Bauteils minimieren. Auf diese Weise können weitere Freiheitsgrade beim Designen des optischen Bauteils hinzugewonnen werden. Beispielsweise wird es möglich, zur Vereinfachung des Spritzgussverfahrens zum Herstellen des vorläufigen Bauteils optische Fehler im Bauteil in Kauf zu nehmen, die anschließend durch geeignete Wahl des Ergänzungsmaterials ausgeglichen werden.

Als optisches Bauteil kann insbesondere ein Tubus (gelegentlich auch Prisma genannt) zum Einkoppeln eines Abbildungsstrahlenganges in ein Brillenglas einer Datenbrille hergestellt werden. Ein derartiger Tubus umfasst typischerweise einen großvolumigen Tubusabschnitt und einen flachen, kleinvolumigen Tubusabschnitt, so dass beim Herstellen des Tubus die oben beschriebenen Vorteile realisiert werden können. Aber auch eine Konstruktion, in der der Tubus ein "großvolumiges" Teil des Brillenglases selbst ist, ist möglich.

Ein erfindungsgemäßes optisches Bauteil umfasst einen kleinvolumigen Abschnitt und einen großvolumigen Abschnitt, wobei das optische Bauteil bis auf einen Bereich im großvolumigen Abschnitt ein einstückig spritzgegossenes Bauteil ist. In dem Bereich im großvolumigen Abschnitt ist das einstückig spritzgegossene Bauteil mittels einer Ergänzung zu dem optischen Bauteil vervollständigt. Die Ergänzung kann eine erstarrte Füllmasse oder ein vorgefertigtes und bspw. eingeklebtes Füllstück sein. Der mittels der Ergänzung vervollständigte Bereich ist eine Aussparung im großvolumigen Abschnitt des optischen Bauteils, und die Ergänzung ist eine in die Aussparung eingefüllte erstarrte oder ausgehärtete Füllmasse oder ein in dien Aussparung eingesetztes vorgefertigtes formstabiles Füllstück.

Das optische Bauteil weist in dem großvolumigen Abschnitt einen ausschließlich Licht führenden Bereich auf, wobei die mit der Ergänzung versehene Aussparung dort vorhanden ist, wo der ausschließlich Licht führende Bereich vorhanden ist.

Das optische Bauteil kann insbesondere als Tubus zum Einkoppeln eines Abbildungsstrahlenganges in ein Brillenglas einer Datenbrille ausgebildet sein, welcher einen großvolumigen Tubusabschnitt und einen flachen, kleinvolumigen Tubusabschnitt aufweisen kann. Das optische Bauteil kann aber auch ein Brillenglas mit einem Tubus sein, in dem der der Tubus ein "großvolumiges" Teil des Brillenglases ist.

Das erfindungsgemäße optische Bauteil lässt sich mit dem erfindungsgemäßen Verfahren unter Verwendung eines Spritzgussprozesses in Serie herstellen, wobei die mit Bezug auf das Verfahren beschriebenen Vorteile realisiert werden können. Insbesondere können die Ausbildung einer Formspannung und einer damit einhergehenden Doppelbrechung sowie der Schrumpf verringert werden.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
- Figur 1: zeigt ein erstes Ausführungsbeispiel für das erfindungsgemäße Verfahren zum Herstellen eines optischen Bauteils anhand eines Ablaufdiagramms.
- Figur 2: zeigt ein spritzgegossenes vorläufiges Bauteil, dessen Herstellung ein Zwischenschritt des erfindungsgemäßen Verfahrens darstellt.
- Figur 3: zeigt ein mit dem erfindungsgemäßen Verfahren hergestelltes optisches Bauteil.
- Figur 4: zeigt ein zweites Ausführungsbeispiel für das erfindungs-gemäße Verfahren zum Herstellen eines optischen Bauteils anhand eines Ablaufdiagramms.
- Figur 5: zeigt ein spritzgegossenes vorläufiges Bauteil zusammen mit einem spritgegossenen Füllstück.
- Figur 6: zeigt ein Brillenglas für eine Datenbrille.

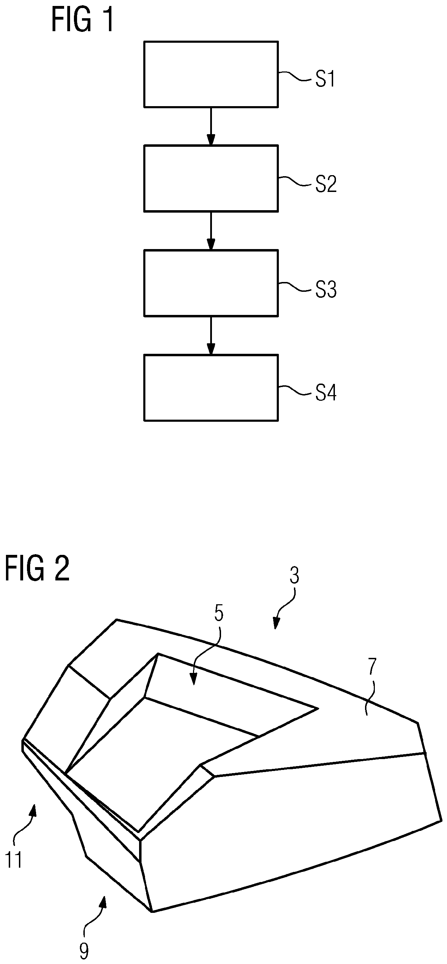

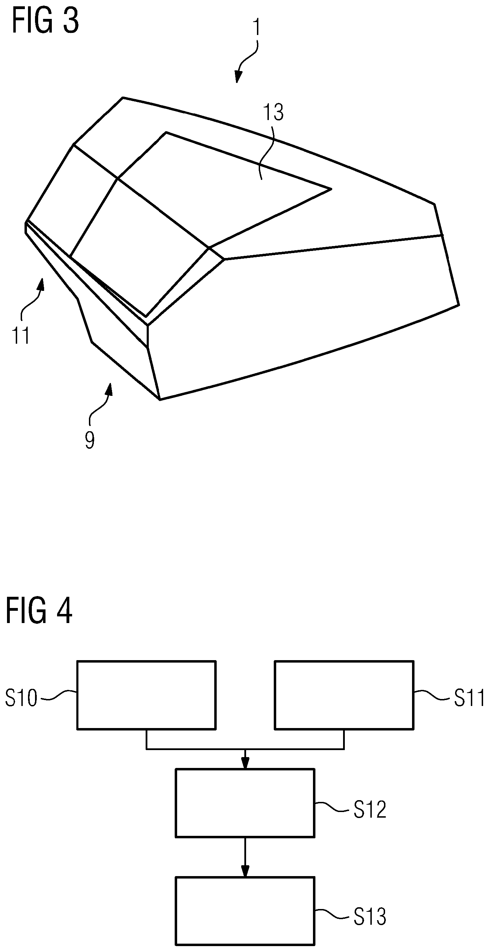

Ein Ausführungsbeispiel für ein erfindungsgemäßes Verfahren zum Herstellen eines optischen Bauteils wird nachfolgend mit Bezug auf die Figuren 1 bis 3 beschrieben. Dabei zeigt Figur 1 das Ausführungsbeispiel in Form eines Ablaufdiagramms, und die Figuren 2 und 3 zeigen das optische Bauteil in verschiedenen Herstellungsstadien.

In dem in Figur 3 dargestellten Ausführungsbeispiel für das erfindungsgemäße Verfahren zum Herstellen eines optischen Bauteils 1 wird in Schritt S1 als zuerst ein vorläufiges Bauteil hergestellt, wie es in Figur 2 dargestellt ist. Das Herstellen des vorläufigen Bauteils 3 erfolgt mittels eines Spritzgussverfahrens unter Verwendung eines Spritzgusswerkzeuges dessen Formflächen so ausgebildet sind, dass in einem Abschnitt des vorläufigen Bauteils 3 eine Aussparung 5 ausgebildet wird. Im Bereich der Aussparung 5 weist das vorläufige Bauteil 3 nicht die Endoberfläche 7 des optischen Bauteils 1 auf. In den übrigen Abschnitten des vorläufigen Bauteils 3 entspricht seine Oberfläche dagegen der Endoberfläche 7 des optischen Bauteils 1. Das Spritzgussmaterial, mit dem das vorläufige Bauteil hergestellt wird, ist im vorliegenden Ausführungsbeispiel Bisphenol A. Es kann aber auch ein anderes zum Spritzgießen von optischen Bauteilen geeignetes Polycarbonat Verwendung finden.

Die Aussparung 5 ist im vorläufigen Bauteil 3 in einem Bereich 9 des vorläufigen Bauteils 3 ausgebildet, welcher im fertigen optischen Bauteil 1 einen großvolumigen Abschnitt 9 des Bauteils bildet (vgl. Figur 2). Daneben weist das fertige optische Bauteil 1 einen kleinvolumigen Abschnitt 11 auf, dessen Volumen im vorliegenden Ausführungsbeispiel lediglich deutlich geringer als das Volumen des großvolumigen Abschnitts 9 ist und dessen Geometrie deutlich flacher ausgebildet ist als die Geometrie großvolumigen Abschnitts 9. Nähere Erläuterungen hierzu erfolgen weiter hinten.

Nachdem das spritzgegossene vorläufige Bauteil 3 ausgekühlt ist, wird die Aussparung 5 in Schritt S2 mit einer Füllmasse 13 gefüllt, die im vorliegenden Ausführungsbeispiel ein Reaktivklebstoff wie bspw. ein 2- oder Mehrkomponentenkleber ist. Der Reaktivklebstoff und das Polycarbonat, aus dem das vorläufige Bauteil 3 besteht, sind dabei derart aneinander angepasst, dass ihre Brechungsindices einander bis auf die vierte Nachkommastelle gleichen. Dadurch kann eine Brechung am Übergang zwischen dem Polycarbonat des vorläufigen Bauteils 3 und dem 2-Komponentenkleber so weitgehend vermieden werden, dass sie die optischen Eigenschaften des Bauteils 1 so wenig beeinflusst, dass vorgesehene Nutzung des optischen Bauteils 1 nicht beeinträchtigt wird. Außerdem sind im vorliegenden Ausführungsbeispiel die Abbe-Zahlen des Polycarbonats und des Reaktivklebstoffs derart aneinander angepasst, dass sie sich bis auf die erste Nachkommastelle gleichen. Durch das Anpassen der Abbe-Zahlen des Polycarbonats und des Reaktivklebstoffs kann zudem erreicht werden, dass die Dispersion in dem neu geschaffenen Bauteil nicht wesentlich abweicht.

Die optischen Eigenschaften der Füllmasse 13 können jedoch auch dazu verwendet werden, gezielt optische Eigenschaften des optischen Bauteils 1 einzustellen. Insbesondere besteht hierbei die Möglichkeit, mit Hilfe der Füllmasse 13 optische oder geometrische Fehler des vorläufigen Bauteils 3 auszugleichen. Dies liefert einen zusätzlichen Freiheitsgrad beim Design des optischen Bauteils 1 und bietet die Möglichkeit, die Herstellung des vorläufigen Bauteils 3 unter Inkaufnahme optischer Fehler mit einem kostengünstigen und wenig aufwendigen Verfahren herzustellen und die optischen Fehler mit Hilfe der Vergussmasse 13 beim Ausfüllen der Aussparung 5 auszugleichen.

Nachdem die Füllmasse in Schritt S2 in die Aussparung 5 eingefüllt worden ist, härtet die Füllmasse 13 in Schritt S3 aus. Danach kann das optische Bauteil 1 in einem optionalen Schritt S4 nachbehandelt werden. Die Nachbehandlung kann bspw. das Aufbringen einer Beschichtung auf die Oberfläche des optischen Bauteils 1 umfassen. Als Beschichtungen können dabei etwa Antireflex-Schichten oder Hartschichten aufgebracht werden. Zudem kann die Nachbehandlung auch eine oder mehrere mechanischen Nachbehandlungen wie Schleifen, Fräsen, Polieren, etc. beinhalten.

Im optischen Bauteil 1 weist der großvolumige Abschnitt 9 innere Bereiche auf, die einen größeren Abstand von der Oberfläche des optischen Bauteils 1 aufweisen, als alle inneren Bereiche des kleinvolumigen Abschnitts 11. Ein optisches Bauteil mit einer Geometrie wie der des in Figur 3 dargestellten optischen Bauteils 1 lässt sich in einem Spritzgussverfahren nur mit erhöhtem technischem Aufwand herstellen. Würde das optische Bauteil 1 vollständig einstückig in einem Spritzgussprozess hergestellt werden, würden unter Umständen innere Spannungen beim Abkühlen des Materials entstehen, die zu einem sehr unterschiedlichen Schrumpf und zu Doppelbrechungen führen können. Ein Grund dafür ist, dass die Wärme aus dem Inneren des kleinvolumigen, flachen Abschnitts 11 schneller und homogener abgeführt werden kann, als aus dem Inneren des großvolumigen, dickeren Abschnitts 9. Würde das optische Bauteil 1 in einem Spritzgussverfahren hergestellt werden, hätte dies zur Folge, dass die unterschiedlichen Auskühlraten zu einem zeitlich stark versetzten Verfestigen des Spritzgussmaterials im Inneren des großvolumigen Abschnitts 9 und im Inneren des kleinvolumigen Abschnitts 11 führen würde. Dies hätte wiederum das Entstehen von mechanischen Spannungen zur Folge, die zu Spannungsdoppelbrechung führen würden.

Im Rahmen des erfindungsgemäßen Verfahrens wird daher nicht das gesamte optische Bauteil 1 mittels Spritzguss hergestellt, sondern ein vorläufiges Bauteil 3, das einen Zwischenschritt beim Herstellen des optischen Bauteils 1 darstellt. Aufgrund der sich im großvolumigen Abschnitt 9 befindenden Aussparung 5 ist das Volumen des großvolumigen Abschnitts 9 im vorläufigen Bauteil 3 gegenüber dem fertigen optischen Bauteil 1 verringert. Außerdem wird durch die Aussparung 5 die Geometrie im großvolumigen Abschnitt 9 derart abgeändert, dass der Abstand innerer Bereiche im großvolumigen Abschnitt zur Oberfläche des großvolumigen Abschnitts 9 verringert wird. Das vorläufige Bauteil 3 weist daher keine Abschnitte auf, deren Volumina und Geometrien sich derart voneinander unterscheiden, dass stark unterschiedliche Auskühlungsraten entstehen. Dadurch werden die Auskühlraten des großvolumigen Abschnitts 9 und des kleinvolumigen Abschnitts 11 einander angenähert, so dass ein weitgehend gleichzeitiges Verfestigen des gesamten vorläufigen Bauteils 3 erreicht werden kann. Auf diese Weise lassen sich mechanische Spannungen im Material erheblich reduzieren oder sogar ganz vermeiden. Damit einhergehend sind Doppelbrechung und Abweichungen von der Geometrie erheblich reduziert oder sogar ganz vermieden.

Ein zweites Ausführungsbeispiel für das erfindungsgemäße Verfahren wird nachfolgend mit Bezug auf Figur 4 beschrieben, die ein das zweite Ausführungsbeispiel repräsentierendes Ablaufdiagramm zeigt. Im zweiten Ausführungsbeispiel wird in Schritt S10 mittels eines Spritzgussverfahrens zuerst ein vorläufiges Bauteil 3 hergestellt, wie es in Figur 2 dargestellt ist. Der Schritt S10 entspricht dabei dem Schritt S1 des ersten Ausführungsbeispiels für das erfindungsgemäße Verfahren.

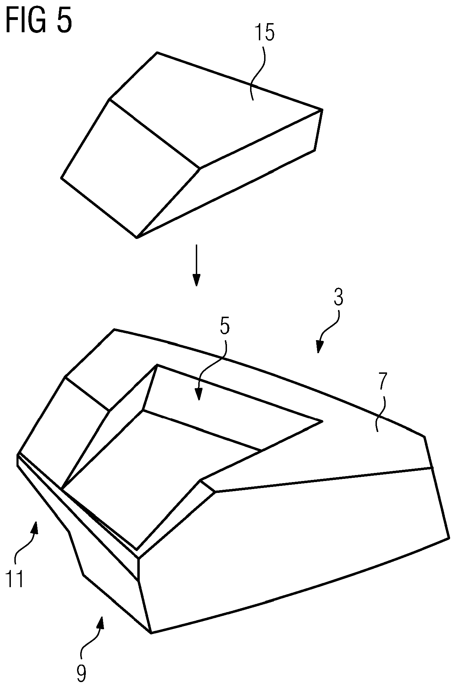

Parallel zu dem Schritt S10 wird in einem Schritt S11 mittels eines Spritzgussprozesses ein Füllstück 15 (siehe Figur 5) hergestellt. Die zum Herstellen des Füllstückes 15 verwendete Spritzgussmasse ist dabei im vorliegenden Ausführungsbeispiel dieselbe wie die Spritzgussmasse, aus dem das vorläufige Bauteil 3 hergestellt wird. Wie im ersten Ausführungsbeispiel kann als Spritzgussmasse Bisphenol A oder ein anderes zum Spritzgießen von optischen Bauteilen geeignetes Polycarbonat Verwendung finden.

Im Schritt S12 wird dann das Füllstück in die Aufnahme 5 im vorläufigen Bauteil 3 eingesetzt. Es kann dabei nach Ausrichtung in Bezug auf die Grenzflächen des spritzgegossenen vorläufigen Bauteils mit Hilfe eines geeigneten Klebers mit dem vorläufigen Bauteil 3 verklebt werden. Für den Kleber, mit dem das Füllstück 15 mit dem vorläufigen Bauteil 3 verklebt wird, gilt, dass es vorteilhaft ist, wenn dieser einen an den Brechungsindex des Spritzgussmaterials angepassten Brechungsindex und/oder eine an die Abbe-Zahl des Spritzgussmaterials angepasste Abbe-Zahl aufweist. Je gelichmäßiger die Abmessung des Klebespaltes ist, desto weniger bedeutend ist jedoch die Anpassung des Brechungsindex und/oder der Abbe-Zahl.

Nach dem Einsetzen des Füllstückes 15 in die Aufnahme 5 des vorläufigen Bauteils 3 kann das optische Bauteil 1 in einem optionalen Schritt S13 nachbehandelt werden. Dieser Schritt kann insbesondere dem Schritt S4 aus dem ersten Ausführungsbeispiel entsprechen.

Obwohl das mit Bezug auf Figur 4 beschriebene Ausführungsbeispiel ein paralleles Herstellen des vorläufigen Bauteils 3 und des Füllstücks 15 vorsieht, können diese auch nacheinander hergestellt werden. Auch besteht die Möglichkeit, das vorläufige Bauteil 3 und das Füllstück 15 aus unterschiedlichen Materialien, bspw. aus unterschiedlichen Thermoplasten herzustellen, etwa um gewünschte optische Effekte zu erzielen. Geeignete Thermoplaste sind bspw. Cyclo-Olefin-Copolymere (COC), Polymethylmethacrylate (PMMA), etc.

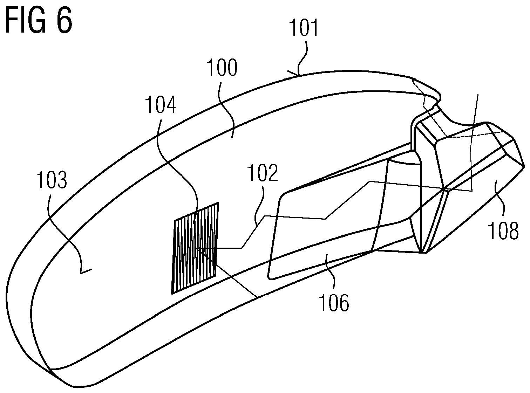

Das mit dem erfindungsgemäßen Verfahren hergestellte optische Bauteil 1 kann insbesondere ein Tubus sein, welcher z.B. als Einkoppelelement zum Einkoppeln eines Abbildungsstrahlengangs dient. Eine Datenbrille umfasst u.a. in der Regel ein Brillenglas, durch welches ein ursprünglich von einer Anzeigevorrichtung ausgehender Abbildungsstrahlengang unter typischerweise mehrfacher Reflektion an den Brillenglasflächen zu einer Auskopplungsstruktur geleitet wird, von der es in Richtung auf das Auge eines Benutzers aus dem Brillenglas ausgekoppelt wird. Ein Beispiel für ein derartiges Brillenglas 100 ist in Figur 6 dargestellt. Das Brillenglas 100 kann wie in Fig. 6 gezeigt, einen Randverdickungsbereich 106 aufweisen, in dem die Dicke des Brillenglases 100 erhöht ist, um ein optimales Leiten des Abbildungsstrahlengangs zur Auskopplungsstruktur 104 zu erreichen. Das Einkoppeln des Abbildungsstrahlengangs 102 in das Brillenglas 100 erfolgt mit Hilfe eines Tubus 108, welcher als Einkoppelelement dient. Mittels des Tubus 108, der gelegentlich auch Prisma genannt wird, wird der vom Display (nicht dargestellt) ausgehende Abbildungsstrahlengang 102 unter einem derartigen Winkel in das Brillenglas 100 eingekoppelt, dass er unter mehrfacher Reflexion an der Außenfläche 101 und der Innenfläche 103 des Brillenglases 100 zur Auskopplungsstruktur 104 gelangen kann.

Die vorliegende Erfindung wurde zum besseren Verständnis der Erfindung anhand von Ausführungsbeispielen detailliert erläutert. Es versteht sich jedoch, dass von den einzelnen Ausführungsbeispielen abgewichen werden kann und dass Merkmale der einzelnen Ausführungsbeispiele miteinander kombiniert werden können. Bspw. kann zum Füllen der Aussparung statt einer aushärtenden viskosen Füllmasse auch eine erstarrende viskose Füllmasse Verwendung finden, sofern der Erstarrungsprozess mit wenig Schrumpf erfolgt. Die Ausführungsbeispiele sollen daher nicht einschränkend gedeutet werden. Stattdessen soll die Erfindung lediglich durch die beigefügten Ansprüche beschränkt sein. Auch braucht nicht jede mögliche Ausführungsvariante der Erfindung alle im vorangegangenen Text genannten Vorteile zu verwirklichen, solange sie von den in den Ansprüchen definierten Gegenständen umfasst ist.

### Bezugszeichenliste

- 1: optisches Bauteil
- 3: vorläufiges Bauteil
- 5: Aussparung
- 7: Endoberfläche des optischen Bauteils
- 9: großvolumiger Abschnitt
- 11: kleinvolumiger Abschnitt
- 13: Füllmasse
- 15: Füllstück
- 100: Brillenglas
- 101: Außenfläche
- 102: Abbildungsstrahlengang
- 103: Innenfläche
- 104: Auskopplungsstruktur
- 106: Randverdickungsbereich
- 108: Tubus

- S1: Herstellen des vorläufigen Bauteils
- S2: Füllen der Aussparung mit Füllmasse
- S3: Aushärten der Füllmasse
- S4: Nachbehandlung
- S10: Herstellen des vorläufigen Bauteils
- S11: Herstellen des Füllstücks
- S12: Einsetzen des Füllstücks in die Aussparung und Verkleben
- S13: Nachbehandlung

## Patentansprüche

1. Verfahren zum Herstellen eines optischen Bauteils (1), welches einen kleinvolumigen Abschnitt (11) und einen großvolumigen Abschnitt (9) umfasst, mit den Schritten:
a) Herstellen eines vorläufigen Bauteils (3) mittels Spritzgießens, wobei im vorläufigen Bauteil gegenüber dem optischen Bauteil (1) ein Bereich (5) weggelassen ist, wobei sich der weggelassene Bereich (5) in demjenigen Abschnitt des vorläufigen Bauteils (3) befindet, der im optischen Bauteil (1) dem großvolumigen Abschnitt (9) entspricht;
b) Fertigstellen des optischen Bauteils (1) durch Ergänzen des vorläufigen Bauteils (3) um den beim Spritzgießen weggelassenen Bereich (5), nachdem das spritzgegossene vorläufige Bauteil (1) erstarrt ist, wobei-der beim Spritzgießen weggelassene Bereich im vorläufigen Bauteil (3) eine Aussparung (5) in demjenigen Abschnitt des vorläufigen Bauteils (3), der im optischen Bauteil (1) dem großvolumigen Abschnitt (9) entspricht, bildet,
- das Ergänzen mittels einer Füllung (13, 15) erfolgt, die in die Aussparung eingebracht wird, und
- die Füllung (13, 15) in Form einer erstarrenden oder aushärtenden viskosen Füllmasse (13) in die Aussparung (5) eingefüllt wird, die anschließend erstarrt bzw. aushärtet, oder die Füllung (13, 15) in Form eines formstabilen Füllstückes (15) in die Aussparung (5) eingefügt wird,
**dadurch gekennzeichnet, dass**
das fertige optische Bauteil (1) im großvolumigen Abschnitt (9) einen ausschließlich Licht führenden Bereich aufweist und sich der beim Spritzgießen des vorläufigen Bauteils weggelassene Bereich (5) dort befindet, wo im fertigen optischen Bauteil (1) der ausschließlich Licht führende Bereich vorhanden ist.

2. Verfahren nach Anspruch 1, in dem das Ergänzen mittels einer Füllung (13, 15) erfolgt, die aus einem Material besteht, das optische Eigenschaften aufweist, die denen des beim Spritzgießen verwendeten Spritzgussmaterials entsprechen.

3. Verfahren nach Anspruch 2, in dem der Brechungsindex des Materials der Füllung (13, 15) dem Brechungsindex des Spritzgussmaterials wenigstens auf die dritte Nachkommastelle gleicht.

4. Verfahren nach Anspruch 2 oder Anspruch 3, in dem die Abbe-Zahl des Materials der Füllung (13, 15) der Abbe-Zahl des Spritzgussmaterials wenigstens auf die Einerstelle gleicht.

5. Verfahren nach einem der Ansprüche 1 bis 4, in dem das Ergänzen mittels einer Füllung (13, 15) erfolgt, die aus einem Material besteht, das optische Eigenschaften aufweist, die im Hinblick auf die optischen Eigenschaften des vorläufigen Bauteils (3) so gewählt sind, dass die Füllung (13, 15) optische und geometrische Fehler des vorläufigen Bauteils (3) minimiert.

6. Verfahren nach Anspruch einem der Ansprüche 1 bis 5, in dem das Füllstück (15) mittels eines Spritzgussprozesses hergestellt wird.

7. Verfahren nach einem der Ansprüche 1 bis 6, in dem als optisches Bauteil (1) ein Tubus (108) zum Einkoppeln eines Abbildungsstrahlenganges in ein Brillenglas (100) einer Datenbrille hergestellt wird.

8. Optisches Bauteil (1), welches einen kleinvolumigen Abschnitt (11) und einen großvolumigen Abschnitt (9) umfasst, wobei das optische Bauteil bis auf einen Bereich (5) im großvolumigen Abschnitt (9) ein einstückig spritzgegossenes Bauteil (3) ist, welches in dem Bereich (5) im großvolumigen Abschnitt (9) mittels einer Ergänzung (13, 15) zu dem optischen Bauteil (1) vervollständigt ist, der mittels der Ergänzung vervollständigte Bereich (5) eine Aussparung (5) im großvolumigen Abschnitt (9) des optischen Bauteils (1) ist und die Ergänzung eine in die Aussparung (5) eingefüllte erstarrte oder ausgehärtete Füllmasse oder ein in dien Aussparung (5) eingesetztes vorgefertigtes formstabiles Füllstück (15) ist, **dadurch gekennzeichnet, dass**
das Bauteil in dem großvolumigen Abschnitt (9) einen ausschließlich Licht führenden Bereich aufweist und in dem die Ergänzung (13, 15) dort vorhanden ist, wo der ausschließlich Licht führende Bereich vorhanden ist.

9. Optisches Bauteil (1) nach Anspruch 8, das als Tubus (108) zum Einkoppeln eines Abbildungsstrahlenganges in ein Brillenglas (100) einer Datenbrille ausgebildet ist.

## Claims

1. Method for producing an optical component (1) comprising a small-volume portion (11) and a large-volume portion (9), including the steps of:
a) producing a preliminary component (3) by means of injection molding, wherein a region (5) is omitted in the preliminary component in relation to the optical component (1), wherein the omitted region (5) is situated in that portion of the preliminary component (3) which corresponds to the large-volume portion (9) in the optical component (1);
b) completing the optical component (1) by complementing the preliminary component (3) with the region (5) that was omitted during injection molding after the injection-molded preliminary component (1) has solidified, wherein
- the region in the preliminary component (3) omitted during the injection molding forms a recess (5) in that portion of the preliminary component (3) which corresponds to the large-volume portion (9) in the optical component (1),
- complementing is effectuated by means of a filling (13, 15), which is introduced into the recess, and
- the filling (13, 15) in the form of a solidifying or curing viscous filler (13) is filled into the recess (5), said filler subsequently solidifying or curing, or the filling (13, 15) in the form of a dimensionally stable filling piece (15) is inserted into the recess (5),
**characterized in that**
the completed optical component (1) has a region only guiding light in the large-volume portion (9) and the region (5) omitted during the injection molding of the preliminary component is situated where the region only guiding light is present in the completed optical component (1).

2. Method according to Claim 1, wherein complementing is effectuated by means of a filling (13, 15) consisting of a material which has optical properties corresponding to those of the injection molding material used during injection molding.

3. Method according to Claim 2, wherein the refractive index of the material of the filling (13, 15) equals the refractive index of the injection molding material to at least the third decimal place.

4. Method according to Claim 2 or Claim 3, wherein the Abbe number of the material of the filling (13, 15) equals the Abbe number of the injection molding material to at least the nearest unit.

5. Method according to any one of Claims 1 to 4, wherein complementing is effectuated by means of a filling (13, 15) consisting of a material having optical properties which, in view of the optical properties of the preliminary component (3), are selected such that the filling (13, 15) minimizes optical and geometric aberrations of the preliminary component (3).

6. Method according to any one of Claims 1 to 5, wherein the filling piece (15) is produced by means of an injection molding process.

7. Method according to any one of Claims 1 to 6, wherein a tube (108) for coupling an imaging beam path into a spectacle lens (100) of smartglasses is produced as an optical component (1).

8. Optical component (1) comprising a small-volume portion (11) and a large-volume portion (9), wherein the optical component is an integrally injection molded component (3) apart from a region (5) in the large-volume portion (9), said integrally injection molded component being completed in the region (5) in the large-volume portion (9) by means of a supplement (13, 15) to form the optical component (1), the region (5) complemented by means of the supplement is a recess (5) in the large-volume portion (9) of the optical component (1) and the supplement is a solidified or cured filler that was filled into the recess (5) or a pre-manufactured dimensionally stable filling piece (15) that was inserted into the recess (5),
**characterized in that**
the component has a region only guiding light in the large-volume portion (9), wherein the supplement (13, 15) is present where the region only guiding light is present.

9. Optical component (1) according to Claim 8, embodied as a tube (108) for coupling an imaging beam path into a spectacle lens (100) of smartglasses.

## Revendications

1. Procédé de fabrication d'un composant optique (1) qui comprend une portion de petit volume (11) et une portion de grand volume (9), ledit procédé comprenant les étapes suivantes :
a) fabriquer un composant préliminaire (3) par moulage par injection, une zone (5) en regard du composant optique (1) étant omise dans le composant préliminaire, la zone omise (5) étant située dans la portion du composant préliminaire (3) qui correspond à la portion de grand volume (9) dans le composant optique (1);
b) terminer le composant optique (1) par ajout du composant préliminaire (3) autour de la zone (5), omise lors du moulage par injection, après la solidification du composant préliminaire (1) moulé par injection, la zone omise lors du moulage par injection dans le composant préliminaire (3) étant formée par un évidement (5) ménagé dans la portion du composant préliminaire (3) qui correspond à la portion de grand volume (9) dans le composant optique (1),
- l'ajout étant effectué par une matière de remplissage (13, 15) qui est introduite dans l'évidement, et
- la matière de remplissage (13, 15) étant introduite dans l'évidement (5) sous la forme d'une pâte de remplissage visqueuse solidifiable ou durcissable (13) qui se solidifie ou durcit ensuite, ou la matière de remplissage (13, 15) étant insérée dans l'évidement (5) sous la forme d'une pièce de remplissage stable (15),
**caractérisé en ce que**
le composant optique fini (1) comporte une zone exclusivement de guidage de lumière dans la portion de grand volume (9) et la zone (5) omise lors du moulage par injection du composant préliminaire étant située à un endroit où la zone exclusivement de guidage de lumière est présente dans le composant optique fini (1) .

2. Procédé selon la revendication 1, dans lequel l'ajout est effectué au moyen d'une matière de remplissage (13, 15) qui comprend une matière dont les propriétés optiques correspondent à celles de la matière utilisée lors du moulage par injection.

3. Procédé selon la revendication 2, dans lequel l'indice de réfraction de la matière de remplissage (13, 15) est égal à l'indice de réfraction de la matière de moulage par injection au moins jusqu'à la troisième décimale.

4. Procédé selon la revendication 2 ou la revendication 3, dans lequel le nombre d'Abbe de la matière de remplissage (13, 15) est égal au nombre d'Abbe de la matière de moulage par injection au moins jusqu'au chiffre des unités.

5. Procédé selon l'une des revendications 1 à 4, dans lequel l'ajout est effectué au moyen d'une matière de remplissage (13, 15) qui comprend une matière ayant des propriétés optiques qui sont choisies au regard des propriétés optiques du composant préliminaire (3) de sorte que la matière de remplissage (13, 15) minimise les erreurs optiques et géométriques du composant préliminaire (3).

6. Procédé selon l'une des revendications 1 à 5, dans lequel la pièce de remplissage (15) est réalisée au moyen d'un procédé de moulage par injection.

7. Procédé selon l'une des revendications 1 à 6, dans lequel un tube (108) d'injection par couplage d'un trajet de rayons de reproduction dans un verre (100) de lunettes de données est réalisé comme composant optique (1) .

8. Composant optique (1) qui comprend une portion de petit volume (11) et une portion de grand volume (9), le composant optique étant un composant (3) moulé par injection d'une seule pièce à l'exception d'une zone (5) dans la portion de grand volume (9) qui est complété dans la zone (5) de la portion de grand volume (9) au moyen d'un ajout (13, 15) au composant optique (1), la zone (5) complétée de l'ajout étant un évidement (5) ménagé dans la portion de grand volume (9) du composant optique (1) et l'ajout étant une matière de remplissage solidifiée ou durcie, qui est introduite dans l'évidement (5), ou une pièce de remplissage stable (15) préfabriquée qui est insérée dans l'évidement (5),
**caractérisé en ce que**
le composant comporte une zone exclusivement de guidage de lumière dans la portion de grand volume (9) et dans laquelle l'ajout (13, 15) est présent à un endroit où la zone exclusivement de guidage de lumière est située.

9. Composant optique (1) selon la revendication 8, qui est conçu comme un tube (108) destiné à l'injection par couplage d'un trajet de rayons de reproduction dans un verre (100) de lunettes de données.
